# EUROPÄISCHE PATENTSCHRIFT

(11) **EP 0 667 989 B1**
(45) Veröffentlichungstag und Bekanntmachung des Hinweises auf die Patenterteilung: **01.05.1996**
(21) Anmeldenummer: 93923517.2
(22) Anmeldetag: 21.10.1993
(51) Int. Cl.: H02K 9/26, H02K 5/124

(54) **ENTSORGUNG VON ABGAS, WELCHES WASSERSTOFF UND EIN RESTGAS BEINHALTET, AUS EINER MIT WASSERSTOFF GEFÜLLTEN ELEKTRISCHEN MASCHINE**
DISPOSAL OF WASTE GAS CONTAINING HYDROGEN AND RESIDUAL GASES FROM AN ELECTRIC MACHINE FILLED WITH HYDROGEN
EVACUATION DE GAZ PERDU CONTENANT DE L'HYDROGENE ET UN GAZ RESIDUEL A PARTIR D'UNE MACHINE ELECTRIQUE REMPLIE D'HYDROGENE

(30) Priorität: 05.11.1992 EP 92118954
(43) Veröffentlichungstag der Anmeldung: 23.08.1995
(73) Patentinhaber: SIEMENS AKTIENGESELLSCHAFT, D-80333 München (DE)
(72) Erfinder: REHM, Helmut, D-46119 Oberhausen (DE); WELLER, Klaus, D-46562 Vörde (DE); SCHÖNFELD, Peter, D-45259 Essen (DE)
(86) Internationale Anmeldenummer: EP9302910
(87) Internationale Veröffentlichungsnummer: WO9410740

(56) Entgegenhaltungen:
- DE-C- 498 120
- GB-A- 255 848
- US-A- 4 531 070
- PATENT ABSTRACTS OF JAPAN vol. 9, no. 85 (E-308)(1808) 13. April 1985 & JP,A,59 216 441 (TOSHIBA) 6. Dezember 1984 in der Anmeldung erwähnt
- PATENT ABSTRACTS OF JAPAN vol. 5, no. 163 (E-78)(835) 20. Oktober 1981 & JP,A,56 091 649 (MITSUBISHI) 24. Juli 1981 in der Anmeldung erwähnt
- PATENT ABSTRACTS OF JAPAN vol. 9, no. 85 (E-308)(1808) 13. April 1985 & JP,A,59 216 441
- PATENT ABSTRACTS OF JAPAN vol. 5, no. 163 (E-78)(835) 20. Oktober 1981 & JP,A,56 091 649

## Beschreibung

Die Erfindung betrifft eine Einrichtung zur Entsorgung von Abgas, welches Wasserstoff und ein Restgas beinhaltet und durch Vakuumextraktion aus einem Dichtsystem einer mit Wasserstoff gefüllten elektrischen Maschine extrahiert wird, mit einer Filteranlage zur Trennung des Restgases von Wasserstoff und Zurückführung des Wasserstoffs zu der Maschine und einer Vakuumpumpe, durch die das Abgas aus dem Dichtsystem extrahierbar und der Filteranlage zuführbar ist. Außerdem bezieht sich die Erfindung auf die Verwendung einer solchen Einrichtung.

Eine Einrichtung der vorgenannten Art geht hervor aus der JP-A 59-216 441.

Die Erfindung bezieht sich im einzelnen auf die Entsorgung von durch Vakuumextraktion gewonnenem Abgas aus einer mit Wasserstoff gefüllten dynamoelektrischen Großmaschine, insbesondere aus einem Turbogenerator. Speziell wird Bezug genommen auf dynamoelektrische Maschinen, die zumindest teilweise mit Wasserstoff gekühlt werden und elektrische Scheinleistungen zwischen etwa 200 MVA und 1500 MVA haben.

Wasserstoff ist ein bevorzugtes Kühlmittel für dynamoelektrische Großmaschinen und als solches seit langem in der Praxis eingeführt. Allerdings stehen den überragenden Wärmetransporteigenschaften des Wasserstoffs nachteilige Eigenschaften gegenüber, insbesondere die hohe Neigung zur Diffusion in Metallen und die leichte Entflammbarkeit, welche nach den einschlägigen Richtlinien spezielle Sicherheitsmaßnahmen erfordert. Insbesondere muß das Entweichen von Wasserstoff aus einer dynamoelektrischen Großmaschine auf als ungefährlich geltende Werte beschränkt werden; es existieren auch strenge Richtlinien zur Begrenzung der Mengen an Wasserstoff, die außerhalb kontrollierter Einrichtungen aus der dynamoelektrischen Großmaschine entweichen.

Zu einem allenfalls mittelbar kontrollierbaren Entweichen von Wasserstoff aus einer dynamoelektrischen Großmaschine kommt es an den notwendigerweise vorhandenen Dichtungen in Teilfugen und an Durchführungen rotierender Wellen in den Gehäusen der Maschinen. Aufgrund der hohen Diffusionsneigung des Wasserstoffes ist es praktisch nicht zu verhindern, daß Dichtöl, mit welchem eine Dichtung, insbesondere eine Wellendichtung, in der elektrischen Maschine beaufschlagt wird, mit Wasserstoff angereichert wird. Dieser Wasserstoff wird zur Begrenzung des Wasserstoffgehaltes aus dem Dichtöl unmittelbar nach dem Abführen von der Dichtung abgeschieden. Dies erfolgt üblicherweise durch Vakuumextraktion in einem Entgasungsbehälter, der teilweise mit Dichtöl gefüllt ist und von einer entsprechenden Vakuumpumpe evakuiert wird. Das hinter der Vakuumpumpe anfallende Abgas, welches Wasserstoff und andere Restgase, insbesondere Luft, enthält, wird nach bisheriger Praxis in die Umgebung abgeführt. Der mit dem Abgas verlorengehende Wasserstoff trägt zu der allenfalls mittelbar kontrollierbaren Menge an entweichendem Wasserstoff bei. Eine Kontrolle des Wasserstoffanteils in dem Abgas ist kaum in ökonomisch sinnvoller Weise möglich, da das Abgas anderes Restgas, insbesondere Luft und leicht verdampfbare Bestandteile des Dichtöls, in merklicher Höhe enthält und darüber hinaus mit Ölresten verunreinigt sein kann; es ist somit einfachen und kostengünstigen Meßverfahren nicht zugänglich.

Dichtungssysteme für elektrische Maschinen, insbesondere für elektrische Maschinen, die mit Wasserstoff gefüllt sind, gehen hervor aus der GB-A 0 760 781, der DE-A 37 23 729 und der WO 92/02747 Al. Aus diesen Dokumenten ergeben sich u.a. vieifältige Möglichkeiten zur Weiterbildung der Dichtsysteme; insbesondere sind Dichtsysteme beschrieben, die zwei voneinander weitgehend getrennte Kreisläufe für Dichtöl enthalten, wobei die verschiedenen Kreisläufe Dichtanordnungen bilden, die zwischen dem Inneren des Gehäuses und der Umgebung hintereinander geschaltet sind und Dichtöl, das mit Wasserstoff gesättigt ist, unabhängig halten von Dichtöl, welches mit Luft gesättigt ist. Zur Entsorgung von Abgasen, die aus den Dichtölkreisläufen erhaltbar sind, gibt es allerdings keine Hinweise.

Andere Hinweise zur Behandlung von Wasserstoff in einer mit Wasserstoff gefüllten elektrischen Maschine, insbesondere für Wasserstoff, welcher in einem Dichtsystem anfällt, gehen hervor aus dem US-Patent 4,531,070, der GB-PS 255,848 sowie der JP-A- 56-91649. Das erstgenannte Dokument betrifft die Behandlung von Wasserstoff, welcher in einem Dichtsystem anfällt; es erwähnt allerdings in keiner Weise die Anwendung der Vakuumextraktion an einem Dichtsystem, um dieses von Abgas, welches zusammengesetzt ist aus Wasserstoff und anderem Restgas, zu befreien. Die beiden letztgenannten Dokumente nehmen keinerlei Bezug zur Entsorgung von Abgas aus einem Dichtsystem und betreffen die Reinerhaltung des Wasserstoffs in einer elektrischen Maschine in der Weise, daß dieser Wasserstoff ständig oder in gewissen Zeitabständen über einen Absorber für Verunreinigungen geleitet wird.

Wichtig ist die Erkenntnis, daß mit geringem Aufwand eine Trennung zwischen Wasserstcff und anderen Gasen, wie sie in einer elektrischen Maschine anfallen können, möglich ist. Somit wird der im Abgas anfallende Wasserstoff nicht in die Umgebung abgeleitet, sondern zu der elektrischen Maschine zurückgeführt. Damit ist eine wesentliche Verbesserung der Bilanz der Wasserstoffverluste möglich.

Die Begriffe "Vakuumextraktion" und "Vakuumpumpe" implizieren nicht notwendigerweise, daß zur Durchführung der Vakuumextraktion ein Vakuum nach Art eines Hochvakuums oder Ultrahochvakuums erzeugt werden muß; vielmehr ist für übliche Zwecke ein Vakuum ausreichend, welches einem Grobvakuum oder einem Feinvakuum im üblichen Sinne entspricht. Der Druck in dem Vakuum kann durchaus einen Wert in der Größenordnung von 100 HPa erreichen; in einem Fall, in dem die Vakuumextraktion hauptsächlich an dem Dichtöl durchgeführt wird, richtet sich der Druck in dem Vakuum nach dem Anteil an Wasserstoff, der in dem entgasten Dichtöl verbleiben soll. Dementsprechend ist die Vakuumextraktion den Erfordernissen jeden Einzelfalles anzupassen. Immerhin bleibt festzuhalten, daß als Vakuumpumpe im Regelfall eine mechanische Pumpe ausreicht. Bei einer mit Wasserstoff gefüllten elektrischen Maschine, die mit üblichem Dichtöl gedichtet wird, wird das Vakuum für die Vakuumextraktion in der Regel eingestellt auf einen Druck zwischen 500 und 600 HPa, nicht zuletzt deswegen, um auszuschließen, daß das Dichtöl bei der Vakuumextraktion zu schäumen beginnt. Um dies auszuschließen, ist es auf alle Fälle vorteilhaft, den Druck oberhalb von 200 HPa zu halten.

Das Vorsehen einer Filteranlage zur Abscheidung des Restgases aus dem Abgas ermöglicht den Aufbau eines Kreislaufes an der elektrischen Maschine, in dem der Wasserstoff zirkuliert. In diesen Kreislauf können alle Bereiche der elektrischen Maschine einbezogen werden, in denen Wasserstoff aus der elektrischen Maschine austritt; insbesondere sind sämtliche Dichtungen sowie alle Einrichtungen, die in die elektrische Maschine hineinführen und zumindest teilweise von Wasserstoff umspült sind, einbeziehbar. Die Einbeziehung der Dichtungen in den Kreislauf für den Wasserstoff beinhaltet vorzugsweise die Einbeziehung des Kreislaufs für das Dichtöl, das insbesondere für die Dichtungen an rotierenden Maschinenwellen erforderlich ist.

Die Aufgabe der Erfindung ist es, die eingangs beschriebene Einrichtung zur Entsorgung von Abgas wesentlich zu verbessern, insbesondere dahingehend, daß sie einen kontinuierlichen Betrieb ermöglicht. Auch soll eine Verwendung dieser Einrichtung angegeben werden.

Die erfindungsgemaße Einrichtung zur Entsorgung von Abgas, welches Wasserstoff und ein Restgas beinhaltet und durch Vakuumextraktion aus einem Dichtsystem einer mit Wasserstoff gefüllten elektrischen Maschine extrahiert wird, mit einer Filteranlage zur Trennung des Restgases von dem Wasserstoff und zur Rückführung des Wasserstoffs zu der Maschine und einer Vakuumpumpe, durch die das Abgas aus dem Dichtsystem extrahierbar und der Filteranlage zuführbar ist, ist ausgezeichnet durch zwei Festkörpermatrizen in der Filteranlage, durch deren jede das Restgas aufnehmbar und somit von dem Wasserstoff trennbar ist, sowie eine Umschalteinrichtung, durch die das Abgas wechselweise durch die eine oder andere Festkörpermatrix führbar und Wasserstoff, der nach Aufnahme des Restgases in der entsprechenden Festkörpermatrix von dem Abgas verblieben ist, zu der Maschine zurückführbar ist.

Die Filteranlage weist zwei Festkörpermatrizen auf, die von dem Abgas durchströmbar sind und die dabei das Restgas aüfnehmen. Die Aufnahme des Restgases kann geschehen durch verschiedene chemische und physikalische Effekte; insbesondere kommen Adsorptions- und Absorptionseffekte in Betracht. Eine solche Festkörpermatrix ist bevorzugtermaßen ein Bett aus fein verteiltem Kupfer und besteht somit im wesentlichen aus Kupfer. An Kupfer lagern sich Restgase wie übliche Luftbestandteile sowie Kohlenwasserstoffe und Wasser leicht an, so daß aus dem Abgas der Wasserstoff mit einer Reinheit von mehr als 99,9% abtrennbar ist. An die Zusammensetzung des Abgases stellt eine Festkörpermatrix aus Kupfer nur geringe Anforderungen; so ist ein Abgas, welches zu etwa 70% aus Wasserstoff besteht und im übrigen hauptsächlich Luft enthält, weitgehend problemlos in Wasserstoff und Restgas auftrennbar unter Gewährleistung einer Reinheit des erhaltenen Wasserstoffs von mehr als 99,9%.

Naturgemäß ist die Aufnahmefähigkeit einer Festkörpermatrix für Restgas beschränkt; aus diesem Grunde sind in der Filteranlage mindestens zwei Festkörpermatrizen vorgesehen, denen eine Umschalteinrichtung zugeordnet ist, mittels derer das Abgas wechselweise der einen und der anderen Festkörpermatrix zugeführt werden kann. Somit ist es möglich, die nicht mehr von dem Abgas durchströmte, insbesondere vollständig mit Restgas beladene Festkörpermatrix gegen eine frische Festkörpermatrix auszutauschen.

Bevorzügt ist es, daß die Filteranlage eine Regenerationseinrichtung aufweist, durch welche eine Festkörpermatrix, die mit Restgas beladen ist, von diesem Restgas befreit und somit in einen frischen Zustand zurückversetzt werden kann. Dies erfolgt dadurch, daß die über die Umschalteinrichtung augeschlossene Regenerationseinrichtung der Festkörpermatrix ein Regenerationsgas zuführt, durch welches an die Festkörpermatrix gebundenes Restgas aufgenommen und nin einen Kamin abgeführt wird. Zusammensetzungen für ein solches Regenerationsgas sind bekannt; insbesondere für Festkörpermatrizen aus Kupfer ist ein Regenerationsgas verwendbar, welches hauptsächlich aus Argon besteht unc einen Anteil von etwa 10 % Wasserstoff enthält.

Eine Filteranlage mit zumindest zwei Festkörpermatrizen und einer Regenerationseinrichtung kann so ausgestaltet, insbesondere mit eigenen Steuervorrichtungen versehen sein, daß sie die gelegentlich notwendige Regeneration einer Festkörpermatrix selbsttätig vornimmt und hierzu insbesondere das Abgas wechselweise über die Mehrzahl an Festkörpermatrizen führt.

Die Vakuumpumpe der Einrichtung ist vorzugsweise an einen Entgasungsbehälter, in dem aus der Maschine abgeführtes Dichtöl durch die Vakuumextraktion entgasbar ist, angeschlossen. Dieser Entgasungsbehälter ist vorzugsweise in einem Dichtölkreislauf des Dichtsystems, in dem Dichtöl zirkuliert, angeordnet.

Der vorstehend erwähnte Dichtölkreislauf kann mit weiterem Vorteil der einzige Dichtölkreislauf der elektrischen Maschine sein, womit ein besonderer Vorteil der Erfindung realisiert wird. In Anwendung der Erfindung ist nämlich der Verzicht auf Dichtungssysteme mit mehreren Dichtölkreisläufen möglich und kann eine hinreichende Begrenzung unkontrollierter Verluste an Wasserstoff bereits dann erreicht werden, wenn die elektrische Maschine ein Dichtungssystem mit einem einzigen Dichtölkreislauf aufweist. Dies gilt insbesondere für eine Maschine in Form einer dynamoelektrischen Großmaschine, insbesondere eines Turbogenerators.

Mit weiterem Vorzug ist jeder Festkörpermatrix in der Einrichtung eine Heizeinrichtung zugeordnet, die durch entsprechende Betätigung eine Regeneration der Festkörpermatrix, d.h. eine Befreiung von aufgenommenem Restgas, bewirken und gegebenenfalls die Wirkung eines besonders zugeführten Regenerationsgases unterstützen kann.

Besonders bevorzugt ist die Anordnung der erfindungsgemäßen Einrichtung jedweder Ausgestaltung an einer dynamoelektrischen Großmaschine, insbesondere einem Turbogenerator.

Die Einrichtung ist in Jedweder Ausgestaltung mit besonderem Vorteil auch verwendbar zur Reinhaltung von Wasserstoff in einer elektrischen Maschine, indem Verunreinigungen des Wasserstoffs in der Filteranlage abgeschieden werden. Zu diesem Zweck wird ggf. eine nennenswerte Leckage von Wasserstoff aus der elektrischen Maschine in Kauf genommen; aurch geeignete Auffangeinrichtungen wird der aus der Maschine ausgetretene Wasserstoff, ggf. gemischt mit Restgasen, der Filteranlage zugeführt, aus der er in reiner Form zurückerhalten und in die elektrische Maschine zurückgeführt wird. Zusätzliche Reinigungseinrichtungen für den Wasserstoff können somit u.U. entfallen.

Ein Ausführungsbeispiel der Erfindung wird nunmehr erläutert anhand der Zeichnung, in der im einzelnen zeigen:
- Fig. 1: ein Blockschaltbild einer elektrischen Maschine, versehen mit einer Einrichtung zur Entsorgung von Abgas und
- Fig. 2: ein Blockschaltbild einer erfindüngsgemäßen Einrichtüng zur Entsorgung von Abgas aus einer elektrischen Maschine.

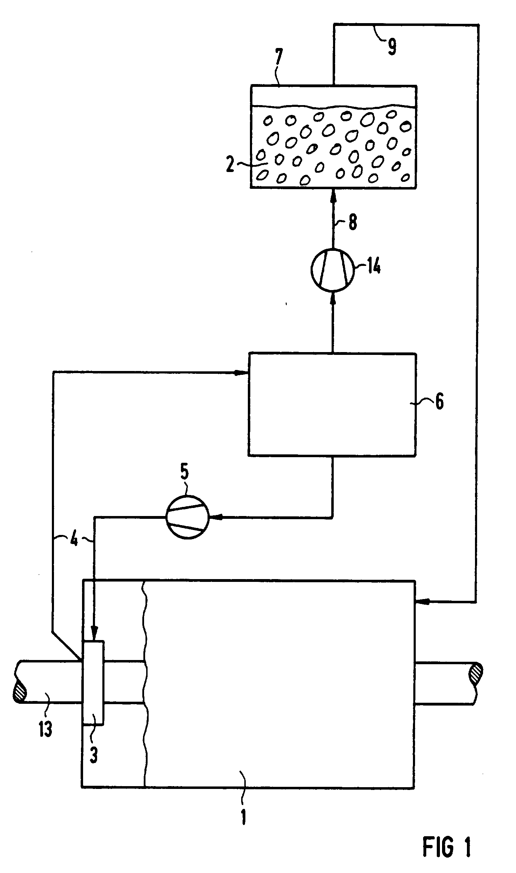

Fig. 1 zeigt eine elektrische Maschine 1, in welcher eine in Rotation versetzbare Maschinenwelle 13 angeordnet ist. Die elektrische Maschine 1, beispielsweise ein Turbogenerator, ist mit Wasserstoff gefüllt. Damit entlang der Maschinenwelle 13 kein Wasserstoff aus der Maschine 1 austritt, ist die Durchführung aer Maschinenwelle 13 durch das Gehäuse der Maschine 1 mittels einer Dichtung in Form eines Dichtringes 3 abgedichtet. Über einen Dichtölkreislauf 4 wird dem Dichtring 3 Dichtöl zugeführt, welches insbesondere Wasserstoff aufnimmt, der entlang der Maschinenwelle 13 aus der Maschine 1 herausgedrängt wird. Das Dichtöl wird mittels einer Dichtölpumpe 5 zu dem Dichtring 3 gefördert. Es strömt von dem Dichtring 3 oder aus dessen näherer Umgebung in dem Dichtölkreislauf 4 zu einem Entgasungsbehälter 6, der gleichzeitig als Vorratsbehälter für das Dichtöl dient. Über eine Vakuumpumpe 14 wird aus dem Entgasungsbehälter 6 Gas, welches über dem Dichtöl steht, extrahiert und somit eine Vakuumextraktion durchgeführt. Das extrahierte Gas ist nach bisheriger Praxis als Abgas abzuführen. Bei dem Abgas handelt es sich um ein Gasgemisch, welches neben Was.serstoff auch andere Restgase beinhaltet, insbesondere Bestandteile der Luft sowie Wasser und Kohlenwasserstoffe aus dem Dichtöl. Durch eine Abgasleitung 8 wird hier das Abgas einer Filteranlage 7 zugeführt, in der als aktives Element eine poröse, von dem Abgas durchströmbare Festkörpermatrix 2 angeordnet ist.

Die Festkörpermatrix 2 besteht aus einem Material, welches Bestandteile des Abgases, die nicht Wasserstoff sind, bevorzugt bindet. Bevorzugtermaßen ist die Festkörpermatrix 2 ein Schüttbett aus fein verteiltem Kupfer. In der Festkörpermatrix 2 kann das neben dem Wasserstoff in dem Abgas enthaltene Restgas, worunter im vorliegenden Zusammenhang auch Wasser und Kohlenwasserstoffe zu verstehen sind, praktisch vollständig absorbiert werden, so daß das aus der Festkörpermatrix 2 schließlich ausströmende Gas praktisch reiner Wasserstoff ist. Unter Verwendung einer Festkörpermatrix 2 aus Kupfer kann Wasserstoff erhalten werden, bei dem der Gehalt an Restgas 0,1 % oder weniger beträgt und der somit als technisch reiner Wasserstoff anzusehen ist.

Der in der Filteranlage 7 erhaltene Wasserstoff wird schließlich über eine Reingasleitung 9 zu der elektrischen Maschine 1 zurückgeführt.

Es versteht sich, daß in Fig. 1 nicht alle Einzelheiten einer üblichen elektrischen Maschine 1, der Anlagen zu ihrer Versorgung mit Wasserstoff, Dichtöl und dergleicher sowie der Filteranlage 7 dargestellt sind; insoweit wird auf die einschlägigen Fachkenntnisse verwiesen.

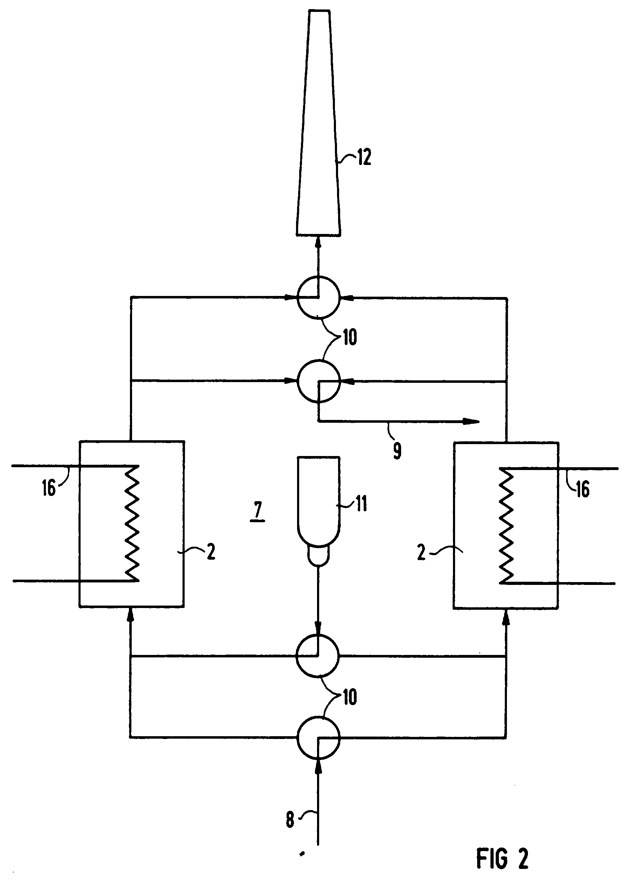

Fig. 2 zeigt eine erfindüngsgemäße Ausgestaltung der in Fig. 1 schematisch gezeigten Filteranlage 7, welche insbesondere für einen kontinuierlichen Betrieb geeignet ist. Die Filteranlage 7 enthält eine erste und eine zweite Festkörpermatrix 2, die wechselweise von dem durch die Abgasleitung 8 zugeführten Abgas durchströmbar sind und aus denen wechselweise der wiedergewonnene reine Wasserstoff durch die Reingasleitung 9 abgeführt werden kann. Die beiden Festkörpermatrizen 2 sind durch zwei Umschalteinrichtungen 10 und 10a, hier dargestellt als vier synchron zu bedienende Hähne, wechselweise zwischen die Abgasleitung 8 und die Reingasleitung 9 bzw. eine Regenerationseinrichtung 11 und einen Kamin 12 einschaltbar. So kann, während die erste Festkörpermatrix 2 mit dem Abgas beaufschlagt wird, die zweite Festkörpermatrix 2 regeneriert werden, indem das an ihr abgeschiedene Restgas entfernt und durch den Kamin 12 abgeführt wird. Selbstverständlich können auch mehr als zwei Festkörpermatrizen 2 mit geeigneten Umschalteinrichtungen 10, 10a vorgesehen sein.

Stellvertretend für eine Vielzahl möglicher Einrichtungen ist dargestellt eine Regenerationseinrichtung 11, welche einen Vorrat eines Regenerationsgases umfaßt, das hauptsächlich aus Argon mit einem geringen Anteil (z.B. 10%) an Wasserstoff besteht, und welche bei der Durchströmung einer Festkörpermatrix 2 darauf abgeschiedenes Restgas ablöst und mitreißt. Es versteht sich, daß die Wirkung des Regenerationsgases ggf. durch Heizeinrichtungen 16 an den Festkörpermatrizen 2 unterstützt werden kann, oder daß zur Regeneration der Festkörpermatrizen 2 evtl. lediglich Heizeinrichtungen 16, ggf. in Verbindung mit Pumpen zur Absaugung des abgelösten Restgases, notwendig sind. In jedem Falle wird das durch die Regeneration aus der betreffenden Festkörpermatrix 2 gelöste Restgas durch den Kamin 12 in die Umgebung entlassen. Es sei bemerkt, daß hier das erwähnte Regenerationsgas Wasserstoff beinhaltet. Dessen Anteil ist jedoch relativ gering im Vergleich zum Anteil des Wasserstoffs im Abgas aus der elektrischen Maschine; daher ist selbst bei Verwendung eines Wasserstoff beinhaltenden Regenerationsgases eine wesentliche Verringerung des unkontrollierten Wasserstoffverlustes aus der elektrischen Maschine möglich.

Es sind vorstehend Möglichkeiten beschrieben, wie auf relativ einfachem Wege aus dem Abgas einer elektrischen Maschine, das Wasserstoff sowie ein Restgas enthält, der Wasserstoff abgetrennt und zu der Maschine zurückgeführt werden kann. Es entfällt damit die bislang notwendige Ableitung dieses Wasserstoffs in die Umgebung, womit eine wesentliche Verbesserung der Bilanz der Wasserstoffverluste aus der elektrischen Maschine möglich ist. Hieraus ergeben sich beachtliche Vereinfachungen sowie Kosteneinsparungen.

## Patentansprüche

1. Einrichtung zur Entsorgung von Abgas, welches Wasserstoff und ein Restgas beinhaltet und durch Vakuumextraktion aus einem Dichtsystem (3, 4, 5, 6) einer mit Wasserstoff gefüllten elektrischen Maschine (1) extrahiert wird, mit einer Filteranlage (7) zur Trennung des Restgases von dem Wasserstoff und zur Rückführung des Wasserstoffs zu der Maschine (1) und einer Vakuumpumpe (18), durch die das Abgas aus dem Dichtsystem (3, 4, 5, 6) extrahierbar und der Filteranlage (7) zuführbar ist,
**gekennzeichnet durch** zwei Festkörpermatrizen (2) in der Filteranlage (7), durch deren jede das Restgas aufnehmbar und somit von dem Wasserstoff trennbar ist, sowie eine Umschalteinrichtung (10), durch die das Abgas wechselweise durch die eine oder andere Festkörpermatrix (2) führbar und Wasserstoff, der nach Aufnahme des Restgases in der entsprechenden Festkörpermatrix (2) von dem Abgas verblieben ist, zu der Maschine (1) zurückführbar ist.

2. Einrichtung nach Anspruch 1, bei der die Filteranlage (7) eine Regenerationseinrichtung (11) aufweist, die mittels der Umschalteinrichtung (10) an diejenige Festkörpermatrix (2) anschließbar ist, welche gerade nicht von dem Abgas durchströmt wird, so daß aus der Regenerationseinrichtung (11) ein Regenerationsgas, durch welches an die Festkörpermatrix (2) gebundenes Restgas aufnehmbar und abführbar ist, durch die Festkörpermatrix (2) leitbar und anschließend in einen Kamin (12) abführbar ist.

3. Einrichtung nach Anspruch 1 oder 2, bei der die Vakuumpumpe (14) an einen Entgasungsbehälter (6), in dem aus der Maschine (1) abgeführtes Dichtöl durch die Vakuumextraktion entgasbar ist, angeschlossen ist.

4. Einrichtung nach Anspruch 3, bei der der Entgasungsbehalter (6) in einem Dichtölkreislauf (4) des Dichtsystems (3, 4, 5, 6) angeordnet ist.

5. Einrichtung nach Anspruch 4 an einer elektrischen Maschine (1), die ein Dichtsystem (3, 4, 5, 6) mit nur einem einzigen Dichtölkreislauf (4) aufweist.

6. Einrichtung nach einem der vorhergehenden Ansprüche, bei der jede Festkörpermatrix (2) im wesentlichen aus Kupfer besteht.

7. Einrichtung nach einem der vorhergehenden Ansprüche, bei der jeder Festkörpermatrix (12) eine Heizeinrichtung (16) zugeordnet ist.

8. Einrichtung nach einem der vorhergehenden Ansprüche an einer dynamoelektrischen Großmaschine (1), insbesondere einem Turbogenerator (1).

9. Verwendung einer Einrichtung nach einem der vorhergehenden Ansprüche zur Reinerhaltung von Wasserstoff in der elektrischen Maschine (1), indem Verunreinigungen des Wasserstoffs in der Filteranlage (7) abgeschieden werden.

## Claims

1. Equipment for the disposal of waste gas which contains hydrogen and a residual gas and is extracted by vacuum extraction from a sealing system (3, 4, 5, 6) of an electrical machine (1) filled with hydrogen, having a filter unit (7) for separating the residual gas from the hydrogen and recycling the hydrogen to the machine (1), and a vacuum pump (18), by means of which the waste gas can be extracted from the sealing system (3, 4, 5, 6) and fed to the filter unit (7), characterized by two solids matrices (2) in the filter unit (7), by means of each of which the residual gas can be absorbed and thus separated from the hydrogen, and a change-over device (10), by means of which the waste gas can be passed alternately through one or other solids matrix (2), and hydrogen, which remains from the waste gas after the residual gas is absorbed in the corresponding solids matrix (2) can be returned to the machine (1).

2. Equipment according to Claim 1, wherein the filter unit (7) has a regeneration device (11) which can be connected by means of the change-over device (10) to the solids matrix (2) through which the waste gas is not at the moment flowing, with the result that a regeneration gas, which can take up and away residual gas bound to the solids matrix (2), can be passed from the regeneration device (11), through the solids matrix (2) and subsequently can be taken off into a stack (12).

3. Equipment according to Claim 1 or 2, wherein the vacuum pump (14) is connected to a degassing vessel (6) in which seal oil discharged from the machine (1) can be degassed by the vacuum extraction.

4. Equipment according to Claim 3, wherein the degassing vessel (6) is arranged in a seal oil circuit (4) of the sealing system (3, 4, 5, 6).

5. Equipment according to Claim 4, on an electrical machine (1) which has a sealing system (3, 4, 5, 6) with just a single seal oil circuit (4).

6. Equipment according to one of the preceding claims, wherein each solids matrix (2) consists essentially of copper.

7. Equipment according to one of the preceding claims, wherein a heating device (16) is associated with each solids matrix (2).

8. Equipment according to one of the preceding claims on a large dynamo-electrical machine (1), in particular a turbogenerator (1).

9. Use of equipment according to one of the preceding claims for keeping hydrogen in the electrical machine (1) pure by separating off impurities of the hydrogen in the filter unit (7).

## Revendications

1. Dispositif pour l'élimination d'un gaz d'échappement, qui contient de l'hydrogène et un gaz résiduel et qui est extrait, par extraction sous vide, d'un système d'étanchéité (3,4,5,6) d'une machine électrique (1) remplie d'hydrogène, et comportant une installation de filtrage (7) pour séparer le gaz résiduel, de l'hydrogène et renvoyer l'hydrogène à la machine (1), et une pompe à vide (18), à l'aide de laquelle les gaz d'échappement peuvent être extraits du système d'étanchéité (3,4,5,6) et envoyés à l'installation de filtrage (7),
caractérisé par deux matrices (2) formées d'un corps solide dans l'installation de filtrage, au moyen de chacune desquelles le gaz résiduel peut être retenu et par conséquent être séparé de l'hydrogène, ainsi que par un dispositif de commutation (10), au moyen duquel le gaz d'échappement peut être envoyé alternativement à travers l'un ou l'autre des matrices (2) formées d'un corps solide, et l'hydrogène, qui reste, à partir du gaz d'échappement, après retenue du gaz résiduel dans la matrice correspondante (2) formée d'un corps solide, peut être renvoyé à la machine (1).

2. Dispositif selon la revendication 1, dans lequel l'installation de filtrage (7) comprend un dispositif de régénération (11), qui peut être raccordé au moyen du dispositif de commutation (10) à la matrice (2) formée d'un corps solide, qui n'est précisément pas traversée par le gaz d'échappement, de sorte qu'à partir du dispositif de régénération (11), un gaz de régénération, au moyen duquel du gaz résiduel lié à la matrice (2) formée d'un corps solide peut être capté et évacué, peut être conduit à travers la matrice (2) formée d'un corps solide et peut être ensuite évacué dans une cheminée (12).

3. Dispositif selon la revendication 1 ou 2, dans lequel la pompe à vide (14) est raccordée à un récipient de dégazage (6), dans lequel de l'huile d'étanchéité, qui est évacuée de la machine (1), peut être dégazée au moyen de l'extraction sous vide.

4. Dispositif selon la revendication 3, dans lequel le récipient de dégazage (6) est disposé dans un circuit d'huile d'étanchéité (4) du système d'étanchéité (3,4,5,6).

5. Dispositif selon la revendication 4 installé sur une machine électrique (1), qui possède un système d'étanchéité (3,4,5,6) ne comportant qu'un seul circuit d'huile d'étanchéité (4).

6. Dispositif selon l'une des revendications précédentes, dans lequel chaque matrice (2) formée d'un corps solide est constituée essentiellement par du cuivre.

7. Dispositif selon l'une des revendications précédentes, dans lequel un dispositif de chauffage (16) est associé à chaque matrice (2) formée d'un corps solide.

8. Dispositif selon l'une des revendications précédentes installé sur une grosse machine dynamoélectrique (1), notamment un turbogénérateur (1).

9. Utilisation d'un dispositif selon l'une des revendications précédentes pour le maintien de la pureté de l'hydrogène dans la machine électrique (1), par le fait que des impuretés de l'hydrogène sont séparées dans l'installation de filtrage (7).
